# EUROPEAN PATENT APPLICATION

(11) **EP 4 606 625 A1**
(43) Date of publication of application: **27.08.2025**
(21) Application number: 22965453.8
(22) Date of filing: 15.11.2022
(51) Int. Cl.: B60L 50/60

(54) **POWER SUPPLY DEVICE, POWER SUPPLY SYSTEM, AND VEHICLE**

(71) Applicant: Shenzhen Yinwang Intelligent Technologies Co., Ltd., Shenzhen, Guangdong 518129 (CN)
(72) Inventor: WANG, Quanwu, Shenzhen, Guangdong 518129 (CN); LIU, Zhang, Shenzhen, Guangdong 518129 (CN); FENG, Ningbo, Shenzhen, Guangdong 518129 (CN)
(74) Representative: Pfenning, Meinig & Partner mbB
(86) International application number: PCT/CN2022/132069
(87) International publication number: WO 2024/103262

(57) **Abstract**

A power supply apparatus, a power supply system, and a vehicle are provided. The power supply system includes a voltage conversion unit, a first power supply circuit, a second power supply circuit, a first battery, and a control unit. The voltage conversion unit includes a first output end and a second output end. The first output end is connected to a first port of the first power supply circuit, and the second output end is connected to a second port of the second power supply circuit. The first power supply circuit further includes a third port, where the third port is connected to the first battery. An output end of the first power supply circuit is connected to a first load, and an output end of the second power supply circuit is connected to a second load. The control unit is configured to control at least one of the voltage conversion unit and the first battery to supply power to the first load. The solutions in this application can be applied to an intelligent vehicle and a new energy vehicle like an electric vehicle, so that security of the power supply system of the vehicle can be improved.

## Description

### TECHNICAL FIELD

This application relates to the field of power electronics technologies, and more specifically, to a power supply apparatus, a power supply system, and a vehicle.

### BACKGROUND

Electrification and intelligentization of vehicles are becoming a mainstream trend of development of the vehicle industry. Conventional fuel-powered vehicles are gradually replaced with new energy vehicles currently. The new energy vehicle is generally powered by both a high-voltage power battery (referred to as a high-voltage battery below) and a low-voltage battery. The low-voltage battery is mainly configured to supply power to an autonomous driving device, a vehicle-mounted entertainment device, and another terminal device. With development of the new energy vehicles, a quantity of devices that need to be powered by the low-voltage battery continuously increases. As a result, a requirement for a low-voltage load inside the vehicle gradually increases, and a probability of a fault of a power supply system increases. In addition, as an autonomous driving level of the vehicle increases, a safety requirement on the low-voltage battery also gradually increases.

In view of this, a power supply solution that can improve security of the power supply system of the vehicle needs to be developed urgently.

### SUMMARY

This application provides a power supply apparatus, a power supply system, and a vehicle, to improve security of the power supply system of the vehicle.

According to a first aspect, a power supply apparatus is provided. The apparatus includes: a first interface, configured to connect to a first output end of a voltage conversion unit; a second interface, configured to connect to a first battery; and a third interface, configured to connect to a first load. The first interface is connected to the second interface through a first circuit, and the third interface is connected to the first circuit through a second circuit.

In the foregoing technical solution, the power supply apparatus may control the voltage conversion unit and/or the first battery to supply power to the first load, and may control the voltage conversion unit to charge the first battery. This helps improve intelligence of the power supply system, and further improves security of the power supply system.

It should be noted that the "interface" in this application mainly means a port connected to a device (such as a power supply or a load) through a conducting wire (or an electrical wire).

With reference to the first aspect, in some implementations of the first aspect, the apparatus includes a first isolation unit. The first isolation unit is disposed between the first interface and the third interface, and is configured to control connection and disconnection of a circuit between the voltage conversion unit and the first load.

In some possible implementations, the first isolation unit is configured to control connection and disconnection of the circuit between the voltage conversion unit and the first load and a circuit between the voltage conversion unit and the first battery.

In the foregoing technical solution, when a fault occurs on the voltage conversion unit, the first isolation unit may control the voltage conversion unit to stop supplying power to the first load. This helps prevent a fault of the voltage conversion unit from affecting another normal power supply circuit, and improves security of the power supply system.

With reference to the first aspect, in some implementations of the first aspect, the first isolation unit includes a first switch and a semiconductor device.

For example, the semiconductor device may include at least one of the following: a bidirectional metal-oxide-semiconductor field-effect transistor, a bidirectional insulated gate bipolar transistor, and a bidirectional bipolar junction transistor.

In the foregoing technical solution, based on the isolation unit, a faulty branch can be quickly disconnected, and the faulty branch circuit can be switched within about 10 microseconds. This can avoid a voltage drop caused by a fault, and help ensure normal running of remaining loads.

With reference to the first aspect, in some implementations of the first aspect, the apparatus includes a second isolation unit. The second isolation unit is disposed between the second interface and the third interface, and is configured to control connection and disconnection of a circuit between the first battery and the first load.

In some possible implementations, the second isolation unit is configured to control connection and disconnection of the circuit between the first battery and the first load and the circuit between the first battery and the voltage conversion unit.

For example, the second isolation unit may also include at least one of the following: a bidirectional metal-oxide-semiconductor field-effect transistor, a bidirectional insulated gate bipolar transistor, and a bidirectional bipolar junction transistor.

In the foregoing technical solution, when a fault occurs on the first battery, the second isolation unit may control the first battery to stop supplying power to the first load. This helps prevent a fault of the first battery from affecting another normal power supply circuit.

With reference to the first aspect, in some implementations of the first aspect, the apparatus further includes an obtaining unit. The obtaining unit is configured to obtain battery status information of the first battery. The second isolation unit controls connection and disconnection of the circuit between the first battery and the first load and the circuit between the first battery and the voltage conversion unit based on the battery status information.

For example, the battery status information includes a voltage and/or a current of the first battery. When the voltage and/or the current of the first battery are/is abnormal, the second isolation unit controls disconnection of the circuit between the first battery and the first load and the circuit between the first battery and the voltage conversion unit.

In some possible implementations, the apparatus further includes a detection unit, configured to detect a battery status of the first battery. The detection unit may send information about the detected battery status (or referred to as battery status information) of the first battery to the obtaining unit.

In the foregoing technical solution, the power supply control unit may monitor the battery status of the first battery, and report an alarm in time when the first battery is abnormal. In some possible implementations, unnecessary loads are shut down to avoid an over-load of the power supply system.

With reference to the first aspect, in some implementations of the first aspect, the apparatus includes a third isolation unit. The third isolation unit is disposed between the first circuit and the third interface, and is configured to control connection and disconnection of the circuit between the first load and the first battery and/or the circuit between the first load and the voltage conversion unit.

For example, the third isolation unit may include a high side drive (high side drive, HSD), or the third isolation unit may include at least one of a bidirectional metal-oxide-semiconductor field-effect transistor, a bidirectional insulated gate bipolar transistor, and a bidirectional bipolar junction transistor.

For example, the first load may include one or more sub-loads. The third isolation unit may include one or more sub-isolation units, and each sub-isolation unit is configured to control connection and disconnection of a circuit between one sub-load and the first battery and/or a circuit between one sub-load and the voltage conversion unit.

In the foregoing technical solution, when a fault occurs on the first load (or the sub-load), the third isolation unit may control the first battery and/or the voltage conversion unit to stop supplying power to the first load (or the sub-load). This helps prevent a fault of the first load (or the sub-load) from affecting normal running of another load.

With reference to the first aspect, in some implementations of the first aspect, the apparatus further includes a fourth interface. The fourth interface is configured to connect to a second load, the fourth interface is connected to a fifth interface through a third circuit, and the fifth interface is configured to connect to a second output end of the voltage conversion unit.

In some possible implementations, the power supply apparatus includes a first control unit and a second control unit. The first control unit includes the first interface, second interface, and third interface, and the second control unit includes the fourth interface and fifth interface.

In some possible implementations, a fourth isolation unit is further disposed between the fourth interface and the fifth interface. The fourth isolation unit is configured to control connection and disconnection of a circuit between the voltage conversion unit and the second load and a circuit between the voltage conversion unit and a second battery.

In the foregoing technical solution, the first output end of the voltage conversion unit, the first battery, and the power supply apparatus form a power supply circuit to supply power to the first load, and the second output end of the voltage conversion unit and the power supply apparatus form another power supply circuit to supply power to the second load. The power supply apparatus may separately control connection and disconnection between the power supply and the load in the two power supply circuits, so that when a fault occurs on one power supply circuit, the other power supply circuit can further normally supply power to the load connected to the power supply circuit. Therefore, security of the power supply system is improved.

With reference to the first aspect, in some implementations of the first aspect, the apparatus further includes a sixth interface. The sixth interface is configured to connect to the second battery. The sixth interface is connected to the third circuit through a fourth circuit.

In some possible implementations, the sixth interface is disposed on the second control unit.

In some possible implementations, a fifth isolation unit is further disposed between the fourth interface and the sixth interface. The fifth isolation unit is configured to control connection and disconnection of a circuit between the second battery and the second load and the circuit between the second battery and the voltage conversion unit.

In the foregoing technical solution, the first output end of the voltage conversion unit, the first battery, and the power supply apparatus form a power supply circuit to supply power to the first load, and the second output end of the voltage conversion unit, the second battery, and the power supply apparatus form another power supply circuit to supply power to the second load. The power supply apparatus may separately control connection and disconnection between the power supply and the load in the two power supply circuits, so that when a fault occurs on a power supply in one power supply circuit, the two power supply circuits can still normally supply power to the load connected to the two power supply circuits. This helps improve a power supply capability of the power supply system. For example, if a fault occurs on the circuit between the second output end of the voltage conversion unit and the power supply apparatus, the voltage conversion unit may be controlled to disconnect from the second battery and the second load, and the second battery continues to supply power to the second load. In addition, the voltage conversion unit may continue to supply power to the first load through the first output end, and the voltage conversion unit may further charge the first battery. This can help ensure a power supply capability of the power supply circuit.

According to a second aspect, a power supply system is provided, including a voltage conversion unit, a first battery, and a first power supply apparatus. The first power supply apparatus includes: a first interface, configured to connect to a first output end of the voltage conversion unit; a second interface, configured to connect to the first battery; and a third interface, configured to connect to a first load. The first interface is connected to the second interface through a first circuit, and the third interface is connected to the first circuit through a second circuit. The voltage conversion unit includes the first output end and a second output end. The first output end is connected to the first interface, and the second output end is configured to connect to a second load. The second interface is connected to the first battery, and the third interface of the power supply apparatus is connected to the first load.

In the foregoing technical solution, the voltage conversion unit supplies power to two power supply circuits through the two output ends. When a fault occurs on one output end, normal running of the other output end is not affected. For example, when a fault occurs on a circuit between the first output end and the power supply apparatus, the voltage conversion unit may continue to supply power to the second load. When a fault occurs on a circuit between the second output end and the second load, the voltage conversion unit may continue to supply power to the power supply apparatus, so as to supply power to the first load, ensure normal running of the first load, and further ensure driving safety of the vehicle. In addition, the power supply system can implement a redundant power supply architecture via a storage battery and a voltage conversion unit. This helps reduce space occupied by the power supply system while ensuring security of the power supply system.

With reference to the second aspect, in some implementations of the second aspect, when a fault occurs on the power supply system, the power supply apparatus controls at least one of the voltage conversion unit and the first battery to supply power to the first load.

In the foregoing technical solution, a single fault isolation of the power supply system can be implemented via the power supply apparatus, to ensure that a vehicle can safely stop when a fault occurs on a power supply, and improve driving safety of the vehicle.

With reference to the second aspect, in some implementations of the second aspect, the power supply apparatus includes a first load branch and a second load branch. The power supply system supplies power to a plurality of sub-loads of the first load through the first load branch and the second load branch. The power supply system further includes a second power supply apparatus. The second power supply apparatus is disposed between the second load branch and a part of the plurality of sub-loads. The second power supply apparatus is configured to control connection and disconnection of a circuit between the power supply system and the part of sub-loads.

In some possible implementations, a load that does not threaten driving safety of the vehicle may be disposed in the second load branch. For example, a load such as a speaker, a loudspeaker, or a blower is disposed in the second load branch. When an under-voltage occurs on the power supply system, the second load branch may be directly disconnected via the power supply apparatus, without a need to control, via the second power supply apparatus, loads connected to the second load branch to be sequentially disconnected, so that control complexity is reduced.

In the foregoing technical solution, two-level control is provided for the load, and this helps reduce complexity of a circuit between the load and the power supply system.

With reference to the second aspect, in some implementations of the second aspect, the power supply apparatus further includes a fourth interface, a fifth interface, and a sixth interface. The fourth interface is connected to the fifth interface through a third circuit. The sixth interface is connected to the third circuit through a fourth circuit. The second output end is connected to the fifth interface. The fourth interface is connected to the second load. The system further includes a second battery. The second battery is connected to the sixth interface. The power supply apparatus controls at least one of the voltage conversion unit, the second battery, and the first battery to supply power to the first load and the second load.

In the foregoing technical solution, the second battery is disposed to supply redundant power to the second load. This helps further improve security of the power supply system, and further helps improve security of the vehicle. In addition, when a fault occurs on one low-voltage battery, the other low-voltage battery and a DCDC controller may continue to supply power to the load, and this helps improve availability of the power supply system.

With reference to the second aspect, in some implementations of the second aspect, the voltage conversion unit includes a second switch. An initial status of the second switch is closed, and when a fault occurs on the voltage conversion unit, a status of the second switch becomes opened.

In the foregoing technical solution, a switch is disposed in the voltage conversion unit, so that the voltage conversion unit can implement under-voltage and/or over-voltage failure protection, and further, in a case of an over-voltage or an under-voltage, a requirement of a D level of an automotive safety integrity level (automotive safety integrity level, ASIL) can be met.

With reference to the second aspect, in some implementations of the second aspect, when a fault occurs on the first load, the power supply apparatus controls to disconnect the first load from the power supply system.

In the foregoing technical solution, when a fault occurs on a load, the related faulty load can be switched in time, to avoid fault spread, so that security of the power supply system is improved.

With reference to the second aspect, in some implementations of the second aspect, when a total payload of the power supply system is greater than or equal to a preset payload threshold, the power supply apparatus controls to disconnect one or more sub-loads of the first load from the power supply system.

For example, the one or more sub-loads may be loads that do not threaten driving safety of the vehicle, for example, may include a load used for seat heating, an air conditioner, a speaker, a loudspeaker, and the like.

In the foregoing technical solution, when the total payload of the power supply system is excessively high, one or more sub-loads of the first load are controlled to be disconnected, to prevent driving safety from being threatened due to insufficient power supply of the power supply system.

With reference to the second aspect, in some implementations of the second aspect, when a state of charge of the first battery is less than or equal to a first battery level threshold, the power supply apparatus controls the voltage conversion unit to charge the first battery.

In the foregoing technical solution, when the first battery is over-discharged, the voltage conversion unit may be controlled in time to charge the first battery. This helps prevent the first battery from being damaged due to the over-discharge, and further helps ensure a power supply capability of the power supply system.

With reference to the second aspect, in some implementations of the second aspect, when a voltage of the first battery is less than or equal to a first voltage threshold, the power supply apparatus controls the voltage conversion unit to charge the first battery.

For example, the first voltage threshold may be 80% of a rated voltage of the first battery, or may be another value.

With reference to the second aspect, in some implementations of the second aspect, when a difference between a battery level of the first battery and a battery level of the second battery is greater than a second battery level threshold, the power supply apparatus controls the voltage conversion unit to charge one battery that has a lower battery level in the first battery and the second battery.

In some possible implementations, states of charge (states of charge, SOCs) of the first battery and the second battery are different, and required charging voltages are also different. If balance control is not performed on the two batteries, in a charging process, a charging current of a battery with a small SOC may be excessively high, overheating may occur, and this affects battery health. In addition, a large difference between the SOCs of the two batteries may further cause the two batteries to charge each other, and this affects a battery lifespan.

In the foregoing technical solution, battery level balance between the first battery and the second battery can be implemented through control of the power supply apparatus. This helps ensure a power supply function of the power supply system, and helps maintain a battery state of health of the first battery and the second battery.

With reference to the second aspect, in some implementations of the second aspect, when a difference between the voltage of the first battery and a voltage of the second battery is greater than a second voltage threshold, the power supply apparatus controls the voltage conversion unit to charge one battery that has a lower voltage in the first battery and the second battery.

For example, the second voltage threshold may be 5% of the rated voltage of the first battery, or may be 5% of a rated voltage of the second battery, or may be another value.

According to a third aspect, a power supply system is provided, including a voltage conversion unit, a first power supply circuit, a second power supply circuit, a first battery, and a control unit. The voltage conversion unit includes a first output end and a second output end. The first output end is connected to a first port of the first power supply circuit, and the second output end is connected to a second port of the second power supply circuit. The first power supply circuit further includes a third port, where the third port is connected to the first battery. An output end of the first power supply circuit is connected to a first load, and an output end of the second power supply circuit is connected to a second load. The control unit is configured to control at least one of the voltage conversion unit and the first battery to supply power to the first load.

For example, the control unit may include the power supply apparatus according to any one of the possible implementations of the first aspect. In some possible implementations, the control unit may further include the second power supply apparatus in the second aspect. Alternatively, the control unit may further include a control apparatus for controlling a switch in the voltage conversion unit.

With reference to the third aspect, in some implementations of the third aspect, the first power supply circuit includes a first switch. The first switch is disposed between the voltage conversion unit and the first load. An initial status of the first switch is closed. The control unit is configured to: when a fault occurs on the voltage conversion unit, control a status of the first switch to be switched to opened. Further, the first battery supplies power to the first load.

With reference to the third aspect, in some implementations of the third aspect, the first power supply circuit includes a second switch. The second switch is disposed between the first battery and the first load. An initial status of the second switch is closed. The control unit is configured to: when a fault occurs on the first battery, control a status of the second switch to be switched to opened. Further, the voltage conversion unit supplies power to the first load.

With reference to the third aspect, in some implementations of the third aspect, the voltage conversion unit includes a third switch. An initial status of the third switch is closed. The control unit is configured to: when a fault occurs on the voltage conversion unit, control a status of the third switch to be switched to opened. Further, the first battery supplies power to the first load.

With reference to the third aspect, in some implementations of the third aspect, the system further includes a second battery. The second power supply circuit further includes a fourth port. The fourth port is connected to the second battery. When a fault occurs on the power supply system, the control unit is configured to control at least two of the first battery, the second battery, and the voltage conversion unit to supply power to the first load and the second load.

With reference to the third aspect, in some implementations of the third aspect, the control unit is configured to control battery level balance between the first battery and the second battery.

With reference to the third aspect, in some implementations of the third aspect, the control unit is configured to: when a difference between a battery level of the first battery and a battery level of the second battery is greater than a first battery level threshold, control the voltage conversion unit to charge one battery that has a lower battery level in the first battery and the second battery.

With reference to the third aspect, in some implementations of the third aspect, the first power supply circuit includes a first load branch and a second load branch. The first power supply circuit supplies power to a plurality of sub-loads of the first load through the first load branch and the second load branch. The control unit includes a first sub-control unit and a second sub-control unit. The first sub-control unit is configured to control connection and disconnection between the first load and the first load branch and/or between the first load and the second load branch. The second sub-control unit is disposed in the second load branch, and is configured to: when one or more sub-loads in the second load branch are abnormal, control to disconnect the first power supply circuit from the one or more sub-loads.

For example, the first sub-control unit may include the power supply apparatus in the first aspect, and the second sub-control unit includes the second power supply apparatus in the second aspect.

With reference to the third aspect, in some implementations of the third aspect, when a total payload of the power supply system is greater than or equal to a preset payload threshold, the control unit is configured to control to disconnect the first power supply circuit from one or more sub-loads of the first load.

With reference to the third aspect, in some implementations of the third aspect, the power supply system includes an obtaining unit, configured to obtain battery status information of the first battery. When the battery status information indicates that the state of charge of the first battery is less than or equal to the first battery level threshold, the control unit is configured to control the voltage conversion unit to charge the first battery.

According to a fourth aspect, a power supply method is provided. The method includes: when it is detected that a first fault occurs on the power supply system according to any one of the possible implementations of the second aspect, controlling a first battery and/or a voltage conversion unit to supply power to a first load.

With reference to the fourth aspect, in some implementations of the fourth aspect, the power supply system further includes a second battery, and the second battery is configured to supply power to a second load. The controlling a first battery and/or a voltage conversion unit to supply power to a first load includes: when a second fault occurs on the power supply system, controlling at least two of the voltage conversion unit, the second battery, and the first battery to supply power to the first load and the second load.

With reference to the fourth aspect, in some implementations of the fourth aspect, the second fault includes at least one of the following: a fault occurs on the first battery, a fault occurs on the second battery, or a fault occurs on the voltage conversion unit.

With reference to the fourth aspect, in some implementations of the fourth aspect, the method further includes: when a fault occurs on the first load, controlling to disconnect the first load from the power supply system.

With reference to the fourth aspect, in some implementations of the fourth aspect, when a total payload of the power supply system is greater than or equal to a preset payload threshold, the method further includes: controlling to disconnect one or more sub-loads of the first load from the power supply system.

With reference to the fourth aspect, in some implementations of the fourth aspect, a power supply apparatus includes a first load branch and a second load branch. The power supply system supplies power to a plurality of sub-loads of the first load through the first load branch and the second load branch. The power supply system further includes a second power supply apparatus. The second power supply apparatus is disposed between the second load branch and a part of the plurality of sub-loads. The controlling to disconnect one or more sub-loads of the first load from the power supply system includes: controlling to disconnect the second load branch from one or more of the part of sub-loads.

With reference to the fourth aspect, in some implementations of the fourth aspect, the method further includes: when a state of charge of the first battery is less than or equal to a first battery level threshold, controlling the voltage conversion unit to charge the first battery.

With reference to the fourth aspect, in some implementations of the fourth aspect, the method further includes: when a voltage of the first battery is less than or equal to a first voltage threshold, controlling, by the power supply apparatus, the voltage conversion unit to charge the first battery.

With reference to the fourth aspect, in some implementations of the fourth aspect, the method further includes: obtaining battery level status information of the first battery and battery level status information of the second battery; and controlling battery level balance between the first battery and the second battery based on the battery level status information.

With reference to the fourth aspect, in some implementations of the fourth aspect, the controlling battery level balance between the first battery and the second battery includes: when a difference between a battery level of the first battery and a battery level of the second battery is greater than a second battery level threshold, controlling the voltage conversion unit to charge one battery that has a lower battery level in the first battery and the second battery.

With reference to the fourth aspect, in some implementations of the fourth aspect, the controlling battery level balance between the first battery and the second battery includes: when a difference between a voltage of the first battery and a voltage of the second battery is greater than a second voltage threshold, controlling the voltage conversion unit to charge one battery that has a lower voltage in the first battery and the second battery.

According to a fifth aspect, a power supply method is provided. The method includes: when it is detected that a first fault occurs on the power supply system according to any one of the possible implementations of the third aspect, controlling a first battery and/or a voltage conversion unit to supply power to a first load.

With reference to the fifth aspect, in some implementations of the fifth aspect, a first power supply circuit includes a first switch. The first switch is disposed between the voltage conversion unit and the first load. An initial status of the second switch is closed, and the method includes: when a fault occurs on the voltage conversion, controlling a status of the second switch to be switched to opened.

With reference to the fifth aspect, in some implementations of the fifth aspect, the first power supply circuit includes a second switch. The second switch is disposed between the first battery and the first load. An initial status of the second switch is closed, and the method includes: when a fault occurs on the first battery, controlling a status of the second switch to be switched to opened.

With reference to the fifth aspect, in some implementations of the fifth aspect, the voltage conversion unit includes a third switch. An initial status of the third switch is closed, and the method includes: when a fault occurs on the voltage conversion unit, controlling a status of the third switch to be switched to opened.

With reference to the fifth aspect, in some implementations of the fifth aspect, the system further includes a second battery. A second power supply circuit further includes a fourth port, and the fourth port is connected to the second battery. When a fault occurs on the power supply system, the method includes: controlling at least two of the first battery, the second battery, and the voltage conversion unit to supply power to the first load and the second load.

With reference to the fifth aspect, in some implementations of the fifth aspect, the method further includes: controlling battery level balance between the first battery and the second battery.

With reference to the fifth aspect, in some implementations of the fifth aspect, the controlling battery level balance between the first battery and the second battery includes: when a difference between a battery level of the first battery and a battery level of the second battery is greater than a first battery level threshold, controlling the voltage conversion unit to charge one battery that has a lower battery level in the first battery and the second battery.

With reference to the fifth aspect, in some implementations of the fifth aspect, the first power supply circuit includes a first load branch and a second load branch. The first power supply circuit supplies power to a plurality of sub-loads of the first load through the first load branch and the second load branch. The control unit includes a first sub-control unit and a second sub-control unit. The first sub-control unit is configured to control connection and disconnection between the first load and the first load branch and/or between the first load and the second load branch. The second sub-control unit is disposed in the second load branch, and is configured to: when one or more sub-loads in the second load branch are abnormal, control to disconnect the first power supply circuit from the one or more sub-loads.

With reference to the fifth aspect, in some implementations of the fifth aspect, when a total payload of the power supply system is greater than or equal to a preset payload threshold, the method further includes: controlling to disconnect the first power supply circuit from the one or more sub-loads of the first load.

With reference to the fifth aspect, in some implementations of the fifth aspect, the method further includes: obtaining battery status information of the first battery; and when the battery status information indicates that the state of charge of the first battery is less than or equal to the first battery level threshold, controlling the voltage conversion unit to charge the first battery.

According to a sixth aspect, a vehicle is provided. The vehicle includes the power supply apparatus according to any one of the possible implementations of the first aspect, or the power supply system according to any one of the possible implementations of the second aspect or any one of the possible implementations of the third aspect.

According to a seventh aspect, a computer program product is provided. The computer program product includes computer program code. When the computer program code is run on a computer, the computer is enabled to perform the method according to any one of the possible implementations of the fourth aspect or any one of the possible implementations of the fifth aspect.

It should be noted that all or some of computer program code may be stored in a first storage medium. The first storage medium may be encapsulated together with a processor, or may be encapsulated separately from a processor.

According to an eighth aspect, a computer-readable medium is provided. The computer-readable medium stores instructions. When the instructions are executed by a processor, the processor is enabled to implement the method according to any one of the possible implementations of the fourth aspect or any one of the possible implementations of the fifth aspect.

According to a ninth aspect, a chip is provided. The chip includes a circuit, and the circuit is configured to perform the method according to any one of the possible implementations of the fourth aspect or any one of the possible implementations of the fifth aspect.

### BRIEF DESCRIPTION OF DRAWINGS

FIG. 1 is a block diagram of a power supply system;
FIG. 2 is a block diagram of a power supply system and a load connected to the power supply system according to an embodiment of this application;
FIG. 3 is a block diagram of another power supply system and a load connected to the power supply system according to an embodiment of this application;
FIG. 4 is a block diagram of still another power supply system and a load connected to the power supply system according to an embodiment of this application;
FIG. 5 is a block diagram of yet another power supply system and a load connected to the power supply system according to an embodiment of this application;
FIG. 6(a) to FIG. 6(c) are a block diagram of still yet another power supply system and a load connected to the power supply system according to an embodiment of this application;
FIG. 7 is a block diagram of a further power supply system and a load connected to the power supply system according to an embodiment of this application;
FIG. 8 is a block diagram of a still further power supply system and a load connected to the power supply system according to an embodiment of this application;
FIG. 9 is a block diagram of a yet further power supply system and a load connected to the power supply system according to an embodiment of this application;
FIG. 10(a) and FIG. 10(b) are a block diagram of a still yet further power supply system and a load connected to the power supply system according to an embodiment of this application;
FIG. 11 is a block diagram of even yet further power supply system and a load connected to the power supply system according to an embodiment of this application; and
FIG. 12 is a schematic flowchart of a power supply method according to an embodiment of this application.

### DESCRIPTION OF EMBODIMENTS

In the descriptions of this application, unless otherwise specified, "/" means "or", for example, A/B may mean "A or B"; "and/or" used herein is used to describe an association relationship between associated objects, and indicates that three relationships may exist. For example, "A and/or B" may indicate the following: Only A exists, both A and B exist, and only B exists. In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

The prefix words "first", "second", and the like in embodiments of this application are merely intended to distinguish between different objects, and impose no limitation on locations, sequences, priorities, quantities, content, or the like of the described objects. Use of a prefix word, such as an ordinal number, used to distinguish described objects in embodiments of this application does not constitute a limitation on the described objects. For a description of a described refer to a description in context of the claims or the embodiments, and the use of the prefix word should not constitute a redundant limitation.

A power supply system provided in this application is applicable to a transport means that needs to be driven by an electric drive. The transport means may include a land transportation tool, a water transportation tool, an air transportation tool, an industrial device, an agricultural device, an entertainment device, or the like. For example, the transport means may be a vehicle. The vehicle is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in embodiments of this application. For another example, the transport means may be an airplane, a ship, or the like. For example, the vehicle may further include a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

With development of intelligent driving technologies, for a vehicle, an original pure manual driving mode also develops to an autonomous driving mode. Current and future vehicles may have one or more of autonomous driving levels L0 to L5. The autonomous driving levels (L0 to L5) are based on a classification standard of the Society of Automotive Engineers (Society of Automotive Engineers, SAE). L0 indicates no automation, L1 indicates driver assistance, L2 indicates partial automation, L3 indicates conditional automation, L4 indicates high automation, and L5 indicates full automation. Tasks of monitoring and responding to road conditions at the L1 to L3 levels are jointly completed by a driver and a system, and the driver needs to take over a dynamic driving task. The L4 and L5 levels enable the driver to be completely transformed into a passenger. High-level autonomous driving at L3 or above requires a power system to have a redundancy design, to provide highly secure low-voltage power supply. However, a power supply system in a current technical background cannot meet a high security requirement of high-level autonomous driving at L3 or above for low-voltage power supply.

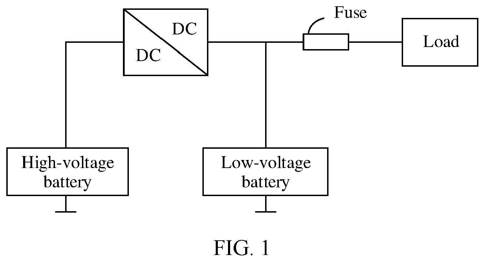

FIG. 1 shows a power supply system. As shown in FIG. 1, in the system, a direct current direct current converter (direct current direct current converter, DCDC) circuit, a low-voltage battery, and a load are directly connected. In other words, the DCDC circuit and the low-voltage battery supply power to the load. A fuse is disposed for the load and the power supply (the low-voltage battery and the DCDC circuit). If any power branch is short-circuited, the fuse is blown. However, because it takes several seconds for the fuse to be blown, a short circuit still causes a voltage drop of the power supply system. When the power supply system is used in an intelligent vehicle, a voltage drop of the power supply system causes an autonomous driving controller to restart. Because it usually takes more than 10 seconds to restart the autonomous driving controller, and a period of more than 10 seconds may cause an accident that seriously threatens safety in a high-level autonomous driving scenario, the power supply system is not suitable for high-level autonomous driving.

In view of this, embodiments of this application provide a power supply apparatus, a power supply system, and a vehicle. The power supply system includes at least one low-voltage battery, a voltage conversion unit, a control unit, and two power supply circuits. Each power supply circuit is connected to a load. The voltage conversion unit supplies power to the two power supply circuits respectively through dual power supply, so that when a fault occurs between the voltage conversion unit and a power supply circuit, continuous power supply to the other power supply circuit by the voltage conversion unit is not affected. When a fault occurs on the power supply system, the control unit may control to disconnect a faulty load and/or a faulty power supply, to ensure normal running of another circuit of the power supply system. This helps prevent an autonomous driving controller from restarting due to a voltage drop, and further helps ensure driving safety of the vehicle.

The following describes technical solutions of embodiments in this application with reference to accompanying drawings.

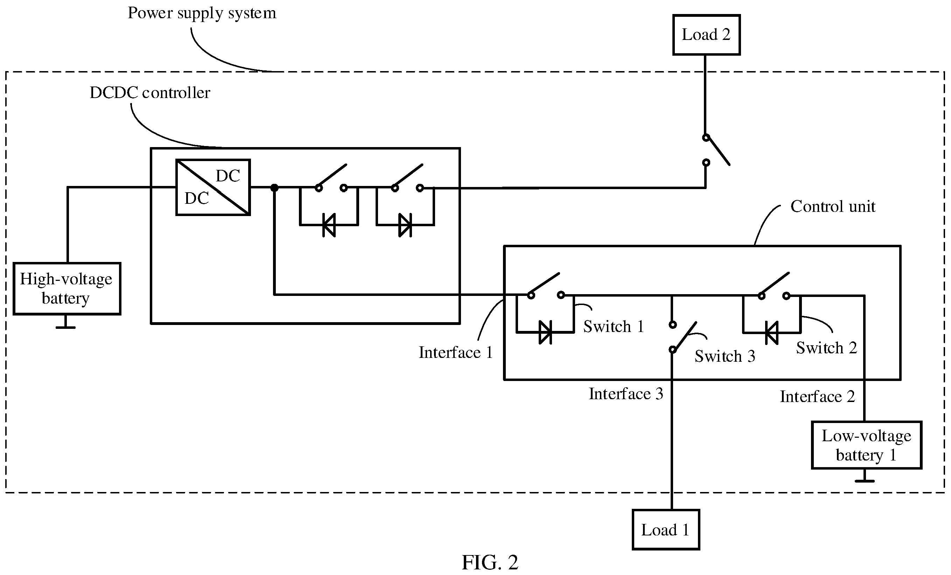

An embodiment of this application provides a power supply apparatus. The power supply apparatus includes: a first interface, configured to connect to a first output end of a voltage conversion unit; a second interface, configured to connect to a first battery; and a third interface, configured to connect to a first load. The first interface is connected to the second interface through a first circuit, and the third interface is connected to the first circuit through a second circuit. As shown in FIG. 2, the power supply apparatus may include a control unit in FIG. 2; the first battery may include a low-voltage battery 1 in FIG. 2; the voltage conversion unit may include a DCDC controller in FIG. 2; the DCDC controller includes two output ends, where one end that is of the DCDC controller and that is connected to the control unit may be the first output end; and the DCDC controller is configured to convert a direct current voltage of a high-voltage battery into a low direct current voltage. For example, the first interface may include an interface 1, the second interface may include an interface 2, and the third interface may include an interface 3.

In some possible implementations, the power supply apparatus includes a first isolation unit. The first isolation unit is disposed between the first interface and the third interface, and is configured to control connection and disconnection of a circuit between the voltage conversion unit and the first load and a circuit between the voltage conversion unit and the first battery. For example, the first isolation unit may include a switch 1 in FIG. 2. When the switch 1 is closed, the DCDC controller may supply power to a load 1 and/or the low-voltage battery 1. When the switch 1 is opened, the DCDC controller stops supplying power to the load 1 and/or the low-voltage battery 1.

In some possible implementations, the power supply apparatus includes a second isolation unit. The second isolation unit is disposed between the second interface and the third interface, and is configured to control connection and disconnection of a circuit between the first battery and the first load and the circuit between the first battery and the voltage conversion unit. For example, the first isolation unit may include a switch 2 in FIG. 2. When the switch 2 is closed, the low-voltage battery 1 may supply power to the load 1. When the switch 2 is opened, the low-voltage battery 1 stops supplying power to the load 1, but the voltage conversion unit may supply power to the load 1.

For example, the switch 1 and/or the switch 2 may be at least one of the following: a bidirectional metal-oxide-semiconductor field-effect transistor, a bidirectional insulated gate bipolar transistor, a bidirectional bipolar junction transistor, or an HSD.

In some possible implementations, the power supply apparatus includes a third isolation unit. The third isolation unit is disposed between the first circuit and the third interface, and is configured to control connection and disconnection of the circuit between the first load and the first battery and/or the circuit between the first load and the voltage conversion unit. For example, the third isolation unit may include a switch 3 in FIG. 2. When the switch 3 is closed, the low-voltage battery 1 and/or the voltage conversion unit may supply power to the load 1. When the switch 3 is opened, the low-voltage battery 1 and the voltage conversion unit stop supplying power to the load 1. For example, the load 1 includes a plurality of sub-loads. The third isolation unit includes sub-isolation units that are in one-to-one correspondence with the plurality of sub-loads. Each sub-isolation unit is configured to control connection and disconnection of a circuit between a sub-load corresponding to the sub-isolation unit and the first battery and/or a circuit between the sub-load corresponding to the sub-isolation unit and the voltage conversion unit. For example, the plurality of sub-loads include a first sub-load, and the sub-isolation units include a first sub-isolation unit. When a fault occurs on the first sub-load, the first sub-isolation unit controls the first sub-load to be disconnected from a power supply system, that is, controls the low-voltage battery 1 and the voltage conversion unit to stop supplying power to the first sub-load.

In some possible implementations, the switch 3 may be an HSD, or may be another switch.

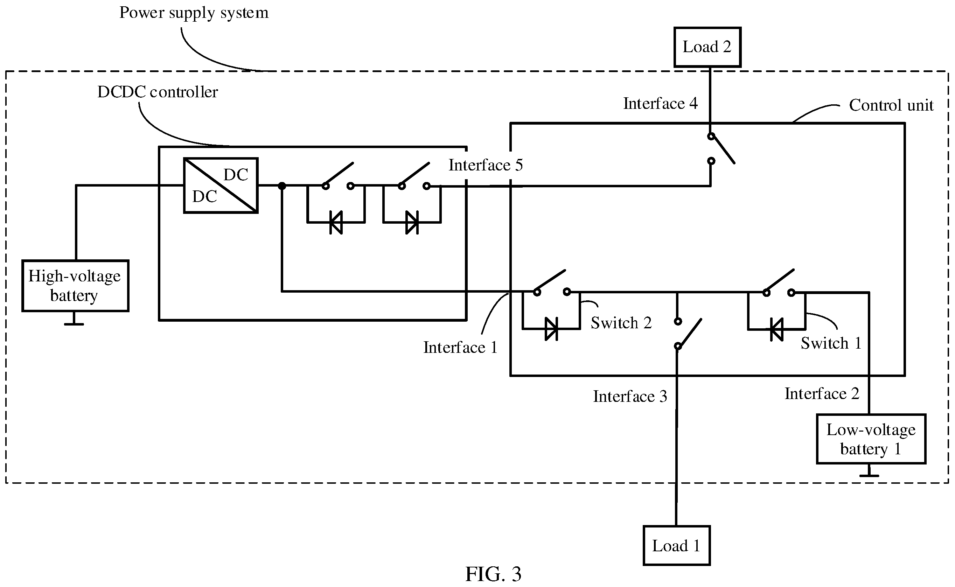

In some possible implementations, the power supply apparatus further includes a fourth interface. The fourth interface is configured to connect to a second load. The fourth interface is connected to a fifth interface through a third circuit. The fifth interface is configured to connect to a second output end of the voltage conversion unit. As shown in FIG. 3, the fourth interface may include an interface 4, and the fifth interface may include an interface 5.

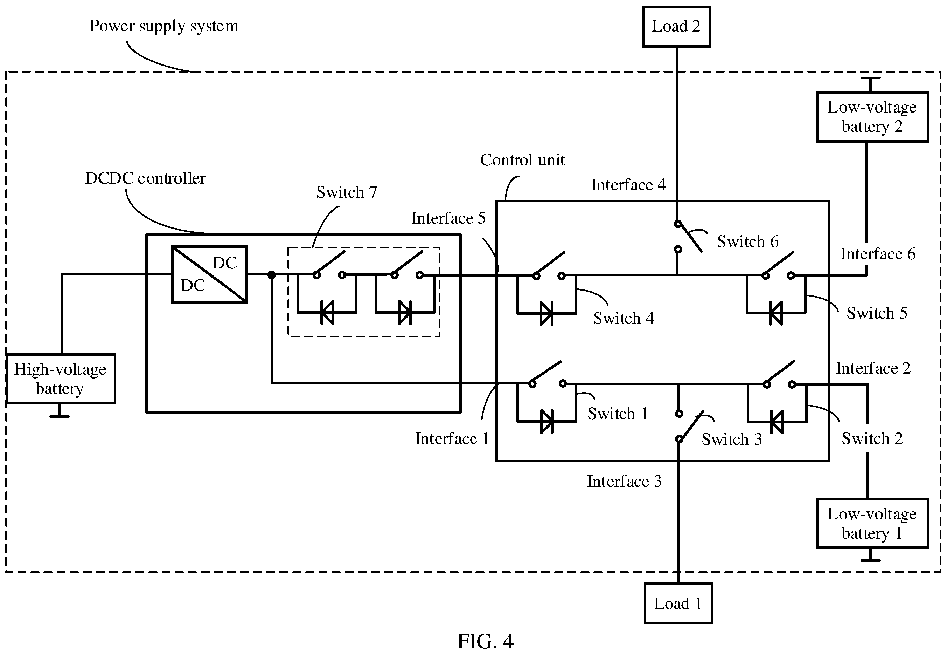

In some possible implementations, the power supply apparatus further includes a sixth interface. The sixth interface is configured to connect to a second battery. The sixth interface is connected to the third circuit through a fourth circuit. As shown in FIG. 4, the second battery may include a low-voltage battery 2, and the sixth interface may include an interface 6.

In some possible implementations, the first battery and the second battery may be storage batteries with a same capacity.

In some possible implementations, the power supply apparatus further includes a fourth isolation unit and a fifth isolation unit. The fourth isolation unit is disposed between the fourth interface and the fifth interface, and is configured to control connection and disconnection of a circuit between the voltage conversion unit and the second load and a circuit between the voltage conversion unit and the second battery. The fifth isolation unit is disposed between the fourth interface and the sixth interface, and is configured to control connection and disconnection of a circuit between the second battery and the second load and the circuit between the second battery and the voltage conversion unit. As shown in FIG. 4, the fourth isolation unit may include a switch 4 shown in FIG. 3. When the switch 4 is closed, the DCDC controller may supply power to a load 2 and/or the low-voltage battery 2. When the switch 4 is opened, the DCDC controller stops supplying power to the load 4 and/or the low-voltage battery 2. The fifth isolation unit may include a switch 5 shown in FIG. 3. When the switch 5 is closed, the low-voltage battery 2 may supply power to the load 2. When the switch 5 is opened, the low-voltage battery 2 stops supplying power to the load 2.

According to the power supply apparatus provided in this embodiment of this application, when a fault occurs on a power supply (the voltage conversion unit or a battery) or a load, a faulty circuit can be switched in time, to prevent another load (for example, an autonomous driving device) from restarting due to a voltage drop of the circuit caused by the fault, so that driving safety of a vehicle is improved.

An embodiment of this application provides a power supply system. The system includes a voltage conversion unit, a first battery, and a power supply apparatus. The voltage conversion unit includes a first output end and a second output end. The first output end is connected to a first interface of the power supply apparatus, and the second output end is connected to a second load. A second interface of the power supply apparatus is connected to the first battery. A third interface of the power supply apparatus is connected to a first load. For example, the power supply apparatus may include the power supply apparatus in the foregoing embodiment.

For example, the power supply system may be shown in FIG. 2.

In some possible implementations, when a fault occurs on the power supply system, the power supply apparatus controls at least one of the voltage conversion unit and the first battery to supply power to the first load. The power supply system shown in FIG. 2 is used as an example. When the power supply system shown in FIG. 2 operates normally, all switches in the power supply system are in a closed state. In an example, when a fault occurs on a circuit between the first output end of the DCDC controller and the control unit, the control unit controls the switch 1 to be opened, and the low-voltage battery 1 continues to supply power to the load 1, to ensure normal running of the power supply system. In another example, when a fault occurs on the low-voltage battery 1, the control unit controls the switch 2 to be opened, and the low-voltage battery 1 continues to supply power to the load 1, to ensure normal running of the power supply system.

For example, the fault that occurs on the circuit between the first output end of the DCDC controller and the control unit may include a short circuit or an open circuit. The fault that occurs on the low-voltage battery 1 may include at least one of an over-voltage, an open circuit, or a short circuit of the low-voltage battery. For example, the open circuit of the low-voltage battery 1 may be caused by a damaged battery that cannot supply power, or may be caused by a damaged or opened circuit between the low voltage battery 1 and a control voltage, for example, may be caused because the circuit is broken.

In some possible implementations, when a fault occurs on the first load, the power supply apparatus controls to disconnect the first load from the power supply system. The power supply system shown in FIG. 4 is used as an example. When a fault occurs on a sub-load of the load 1, the control unit controls a switch that controls the sub-load and that is in the switch 3 to be opened, to prevent another sub-load from restarting due to a voltage drop caused by the fault of the sub-load. When a fault occurs on a sub-load of the load 2, the control unit controls a switch that controls the sub-load and that is in the switch 6 to be opened, to prevent another sub-load from restarting due to a voltage drop caused by the fault of the sub-load.

For example, the fault that occurs on the load may include a fault (a short circuit or an over-load) of the load, and a short circuit or an open circuit of a circuit connected to the load.

In some possible implementations, the power supply apparatus further includes a fourth interface, a fifth interface, and a sixth interface. The fourth interface is connected to the fifth interface through a third circuit. The sixth interface is connected to the third circuit through a fourth circuit. The second output end is connected to the fifth interface. The fourth interface is connected to the second load. The system further includes a second battery. The second battery is connected to the sixth interface. The power supply apparatus controls at least one of the voltage conversion unit, the second battery, and the first battery to supply power to the first load and the second load. The power supply system shown in FIG. 4 is used as an example. All switches in the power supply system are in a closed state. In an example, when a fault occurs on the circuit between the first output end of the DCDC controller and the control unit, the control unit controls the switch 1 to be opened, so that the low-voltage battery 1 continues to supply power to the load 1, and the DCDC controller (through the second output end) and the low-voltage battery 2 continue to supply power to the load 2, to ensure normal running of the power supply system. In another example, when a fault occurs on a circuit between the second output end of the DCDC controller and the control unit, the control unit controls the switch 4 to be opened, so that the low-voltage battery 2 continues to supply power to the load 2, and the DCDC controller (through the first output end) and the low-voltage battery 1 continue to supply power to the load 1, to ensure normal running of the power supply system. In still another example, when a fault occurs on the low-voltage battery 1, the control unit controls the switch 2 to be opened, and the low-voltage battery 1 continues to supply power to the load 1, to ensure normal running of the power supply system. In yet another example, when a fault occurs on the low-voltage battery 2, the control unit controls the switch 5 to be opened, and the low-voltage battery 1 continues to supply power to the load 1, to ensure normal running of the power supply system.

In some possible implementations, the voltage conversion unit includes a second switch. An initial status of the second switch is closed, and when a fault occurs on the voltage conversion unit, a status of the second switch becomes opened. For example, the second switch may be a switch 7 shown in FIG. 4, and when a fault occurs on the DCDC controller, the switch 7 is opened.

For example, the fault that occurs on the DCDC controller may include at least one of an over-voltage, an over-load, and a short circuit of the DCDC controller.

For example, the load 1 shown in FIG. 2 to FIG. 4 may include a steering braking control load, for example, an electronic stability program (electronic stability program, ESP), an electronic park brake (electronic park brake, EPB) system, and an electric power steering (electronic power steering, EPS) control unit; or may further include another load.

In some possible implementations, the power supply apparatus further includes an obtaining unit. The obtaining unit is configured to obtain battery status information of the first battery. The second isolation unit controls connection and disconnection of a circuit between the first battery and the first load and a circuit between the first battery and the voltage conversion unit based on the battery status information.

In some possible implementations, when a total payload of the power supply system is greater than or equal to a preset payload threshold, the power supply apparatus controls to disconnect one or more sub-loads of the first load from the power supply system. For example, the total payload of the power supply system may be represented by a total current of the DCDC controller or a total output power of the DCDC controller. For example, if the DCDC controller may provide a current of 300 amperes (amperes, A), the preset payload threshold may be 300 A, 310 A, or another value. For example, when it is detected that a total current of the power supply system exceeds 300 A, the one or more sub-loads of the first load are controlled to be disconnected from the power supply system. It may be understood that the DCDC controller may provide the current of 300 A, and the first battery (for example, the low-voltage battery 1) may also provide a current, for example, may provide a current of 20 A. However, if a current required by the first load needs to be greater than 300 A for a long time, the first battery is over-discharged. This not only affects a service life of the first battery, but also threatens vehicle safety because the battery level of the first battery is insufficient when the fault occurs on the DCDC controller.

In some possible implementations, when a state of charge of the first battery is less than or equal to a first battery level threshold, the power supply apparatus controls the voltage conversion unit to charge the first battery. For example, the first battery level threshold may be 50% of a total battery level of the first battery, or may be 60% of the total battery level of the first battery, or may be another value.

In some possible implementations, when a difference between a battery level of the first battery and a battery level of the second battery is greater than a second battery level threshold, the power supply apparatus controls the voltage conversion unit to charge one battery that has a lower battery level in the first battery and the second battery. For example, the second battery level threshold may be 20% of the total battery level of the first battery, or may be 20% of a total battery level of the second battery, or may be another value.

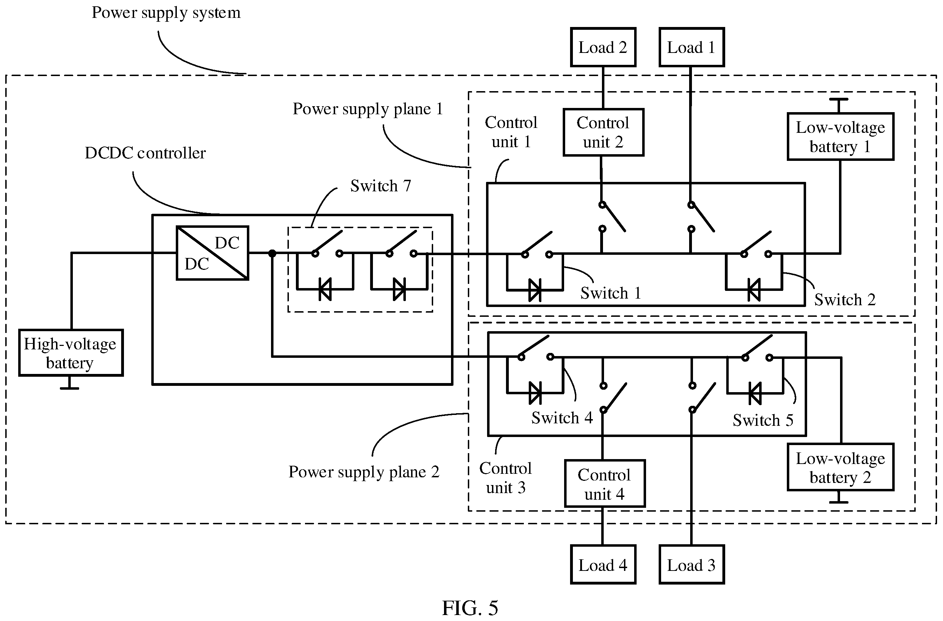

In some possible implementations, the power supply apparatus may alternatively include two or more control units. As shown in FIG. 5, the power supply apparatus may include a control unit 1 and a control unit 3 shown in FIG. 5. The control unit 1 may include the first interface, the second interface, and the third interface in the foregoing embodiments. For example, a port that is of the control unit 1 and that is connected to the DCDC controller is the first interface, a port that is of the control unit 1 and that is connected to the low-voltage battery 1 is the second port, and a port that is of the control unit 1 and that is connected to the load 1 and a control unit 2 is the third interface. The control unit 3 may include the fourth interface, the fifth interface, and the sixth interface in the foregoing embodiments. For example, a port that is of the control unit 2 and that is connected to the DCDC controller is the fifth interface, a port that is of the control unit 2 and that is connected to the low-voltage battery 2 is the sixth port, a port that is of the control unit 2 and that is connected to the load 3 and the control unit 4 is the fourth interface. For example, a power supply circuit including the control unit 1, the first output end of the DCDC controller, and the low-voltage battery 1 is referred to as a power supply plane 1. A power supply circuit including the control unit 3, the second output end of the DCDC controller, and the low-voltage battery 2 is referred to as a power supply plane 2. The power supply plane 1 and the power supply plane 2 may separately supply power to the first load and the second load in the foregoing embodiments. For example, the first load in the foregoing embodiments may include the load 1 and a load 2 shown in FIG. 5, and the second load in the foregoing embodiments may include the load 3 and a load 4 shown in FIG. 5.

In some possible implementations, a steering component, a braking component, and an autonomous driving component are separately connected to the power supply plane 1 and the power supply plane 2 based on a redundancy requirement, so that when a fault occurs on the power supply plane 1 and the power supply plane 2 can normally supply power, safe braking of a vehicle can be implemented via the steering component, the braking component, and the autonomous driving component that are connected to the power supply plane 2.

In some possible implementations, the power supply apparatus includes a first load branch and a second load branch. The power supply system supplies power to a plurality of sub-loads of the first load through the first load branch and the second load branch. The power supply system further includes a second power supply apparatus. The second power supply apparatus is disposed between the second load branch and a part of the plurality of sub-loads. The second power supply apparatus is configured to control connection and disconnection of a circuit between the power supply system and the part of sub-loads. For example, the first load branch may include a circuit configured to connect to the load 1 in FIG. 5, the second load branch may include a circuit configured to connect to the load 2 in FIG. 5, and the second power supply apparatus may include the control unit 2 in FIG. 5. The load 1 may include a plurality of sub-loads, and the load 2 may also include a plurality of sub-loads. When a fault occurs on a sub-load of the load 1, the control unit 1 controls to disconnect the sub-load from the power supply system (specifically, the power supply plane 1). When a fault occurs on a sub-load of the load 2, the control unit 2 controls to disconnect the sub-load from the power supply system. In some possible implementations, the control unit 1 may alternatively control to disconnect the control unit 2 from the power supply system.

In some possible implementations, the control unit 2 may control a connection between the load 2 and the power supply system via an HSD. Alternatively, the control unit 2 may control a connection between the load 2 and the power supply system via at least one of a bidirectional metal-oxide-semiconductor field-effect transistor, a bidirectional insulated gate bipolar transistor, and a bidirectional bipolar junction transistor.

For example, when the power supply system is disposed in the vehicle, the power supply plane 1 may supply power to a device on the right side of the vehicle, and the power supply plane 2 may supply power to a device on the right side of the vehicle. For example, the control unit 1 may be disposed in an engine compartment (or a front trunk or an engine box) of the vehicle, and the control unit 3 may be disposed in a rear trunk of the vehicle. For example, the load 1 shown in FIG. 5 may include one or more of an EPS, an intelligent brake system (intelligent brake system, IBS), and a vehicle dynamic control (vehicle dynamic control, VDC) system that are on the right side of the vehicle. Alternatively, the load 1 may include a front blower, a condensation fan, and the like. The load 3 shown in FIG. 5 may include one or more of an EPS, a VDC, and a redundant brake unit (redundant brake unit, RBU) system that are on the left side of the vehicle. Alternatively, the load 3 may include a rear blower, a speaker, a suspension, and the like. The load 2 shown in FIG. 5 may include a vehicle lock, a turn light, an instrument central control system, a speaker system, and the like that are on the right side of the vehicle. The load 4 shown in FIG. 5 may include a vehicle lock, a turn light, an airbag, a telematics box (telematics box, T-box), and the like that are on the left side of the vehicle.

The power supply system provided in this embodiment of this application provides two power supply planes for the load of the vehicle. One power supply plane is powered by the voltage conversion unit and the battery, and the other plane is powered by at least the voltage conversion unit. The voltage conversion unit provides two outputs, and the two outputs are separately connected to the two power supply planes, so that when a fault occurs on one power supply plane, normal running of the other power supply plane is not affected. Therefore, when the fault occurs, it can be ensured that the vehicle stops safely. Further, when a fault occurs on a power supply, the power supply is controlled to be disconnected from the power supply system, so that another power supply is not affected and can still supply power to the load. This helps ensure normal running of the power supply system. In addition, when a fault occurs on a load branch, the faulty branch is disconnected in a short time via the power supply apparatus, so that another load function is not affected due to a voltage drop of the power supply plane.

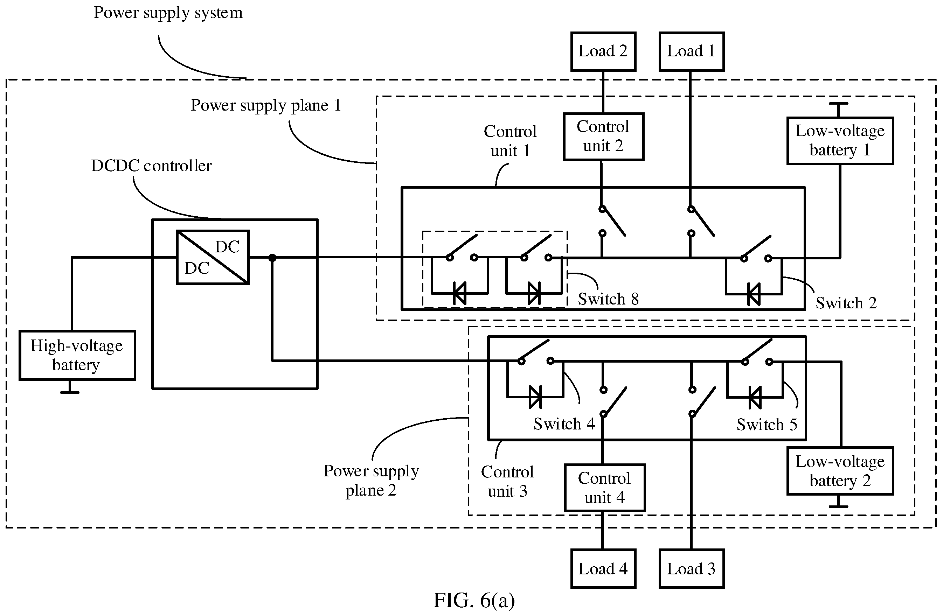

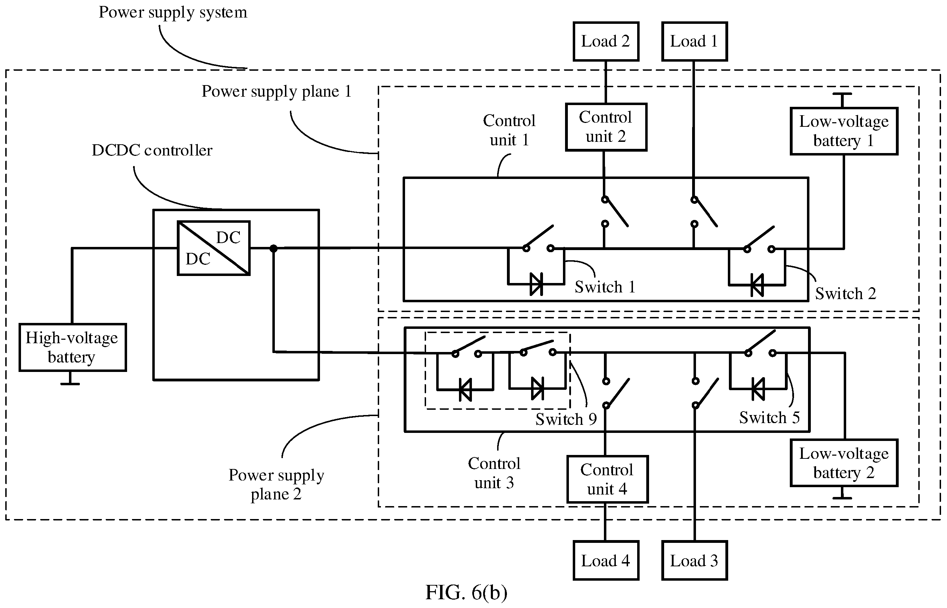

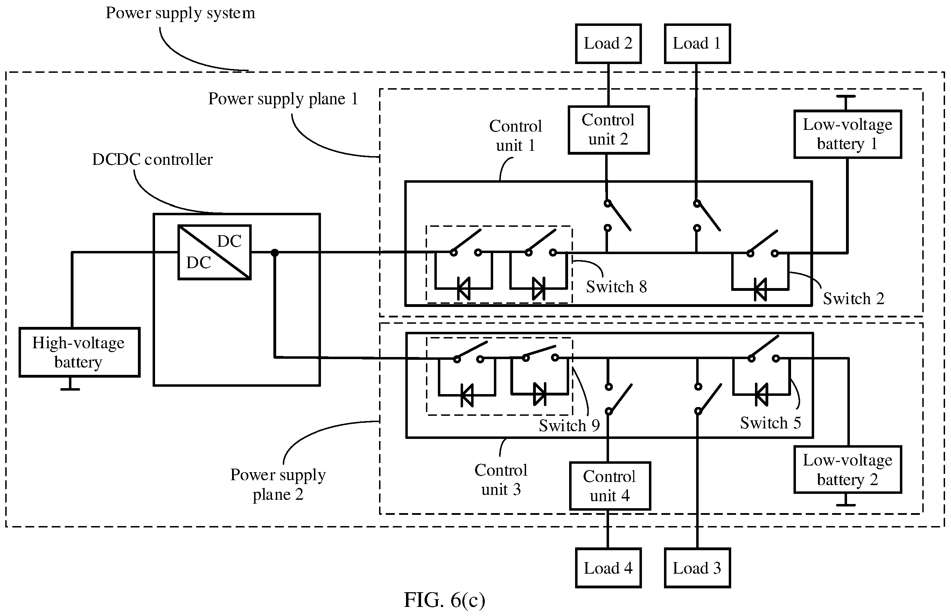

FIG. 6(a) to FIG. 6(c) are a block diagram of a power supply system according to an embodiment of this application. For example, the first isolation unit in the power supply apparatus in the foregoing embodiments may alternatively be a switch 8 shown in FIG. 6(a), and the fourth isolation unit in the power supply apparatus in the foregoing embodiments may alternatively be a switch 9 shown in FIG. 6(b). In some possible implementations, when the power supply apparatus includes a control unit 1 and a control unit 3 shown in FIG. 6(c), the first isolation unit and the fourth isolation unit in the power supply apparatus may be a switch 8 and a switch 9 shown in FIG. 6(c).

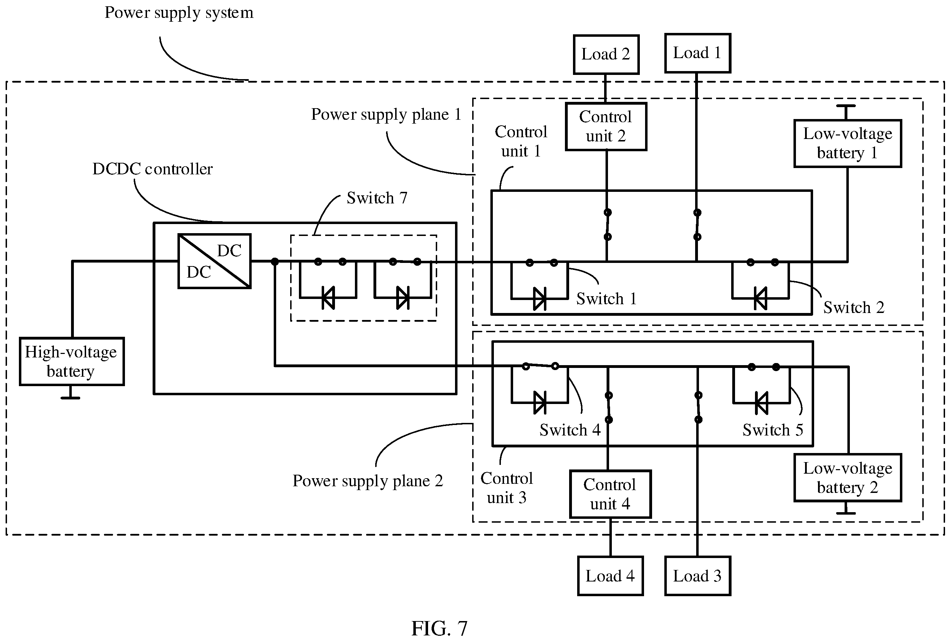

The following describes how the power supply system provided in embodiments of this application ensures security of low-voltage power supply with reference to FIG. 7 to FIG. 11.

FIG. 7 is a block diagram of a power supply system during normal running according to an embodiment of this application. As shown in FIG. 7, when each power supply (such as a DCDC controller, a low-voltage battery 1, and a low-voltage battery 2), each load, and a circuit between the power supply and the load are normal, all switches in the power supply system are in a closed state, both the low-voltage battery 1 and the DCDC controller supply power to a load associated with a power supply plane 1, and both the low-voltage battery 2 and the DCDC controller supply power to a load associated with a power supply plane 2.

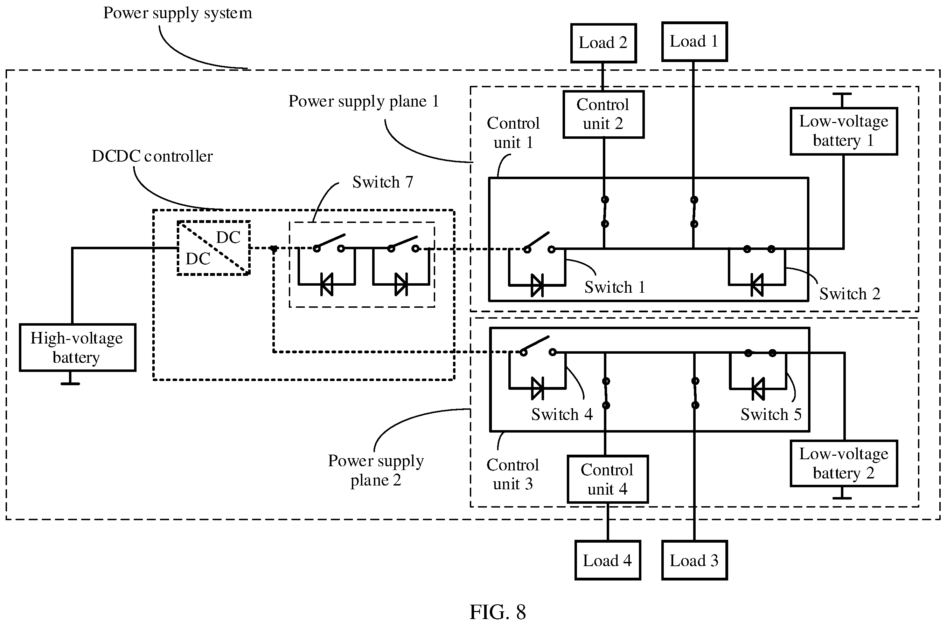

As shown in FIG. 8, when a fault (for example, a short circuit, an over-voltage, or an over-load) occurs on the DCDC controller, a control unit 1 may control a switch 1 to be opened, and a control unit 3 may control a switch 3 to be opened, so that the low-voltage battery 1 supplies power to the load associated with the power supply plane 1, and the low-voltage battery 2 supplies power to the load associated with the power supply plane 2. Alternatively, when a fault (for example, a short circuit, an over-voltage, or an over-load) occurs on the DCDC controller, a switch 7 inside the DCDC controller may be opened (the switch 1 may still remain the closed state), and a control unit 3 controls a switch 3 to be opened, so that the low-voltage battery 1 supplies power to the load associated with the power supply plane 1, and the low-voltage battery 2 supplies power to the load associated with the power supply plane 2.

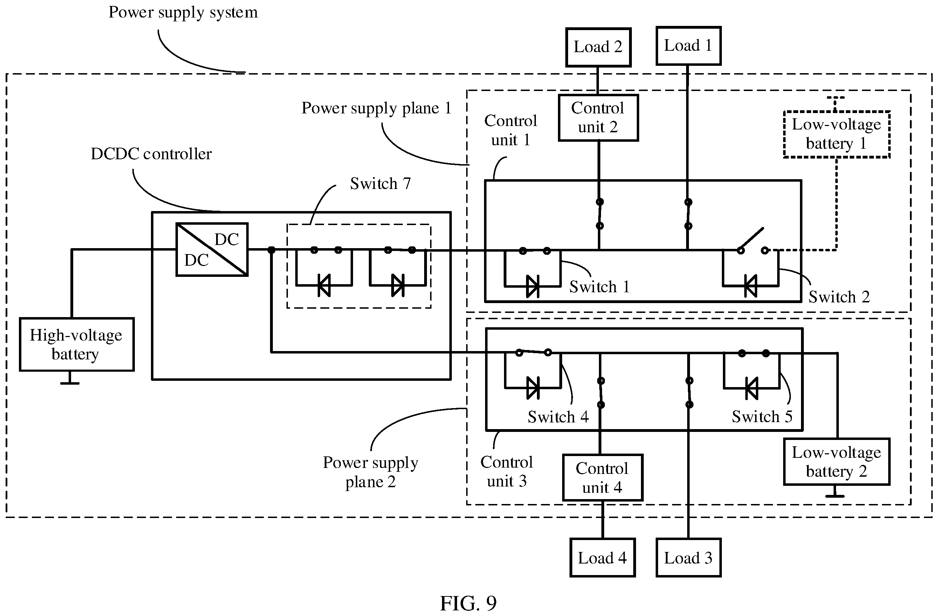

As shown in FIG. 9, when a fault (for example, a short circuit, an over-voltage, or an over-load) occurs on the low-voltage battery 1, a control unit 1 may control a switch 2 to be opened, so that the low-voltage battery 1 supplies power to the load associated with the power supply plane 1. At the same time, the load associated with the power supply plane 2 is still powered by both the low-voltage battery 2 and the DCDC controller.

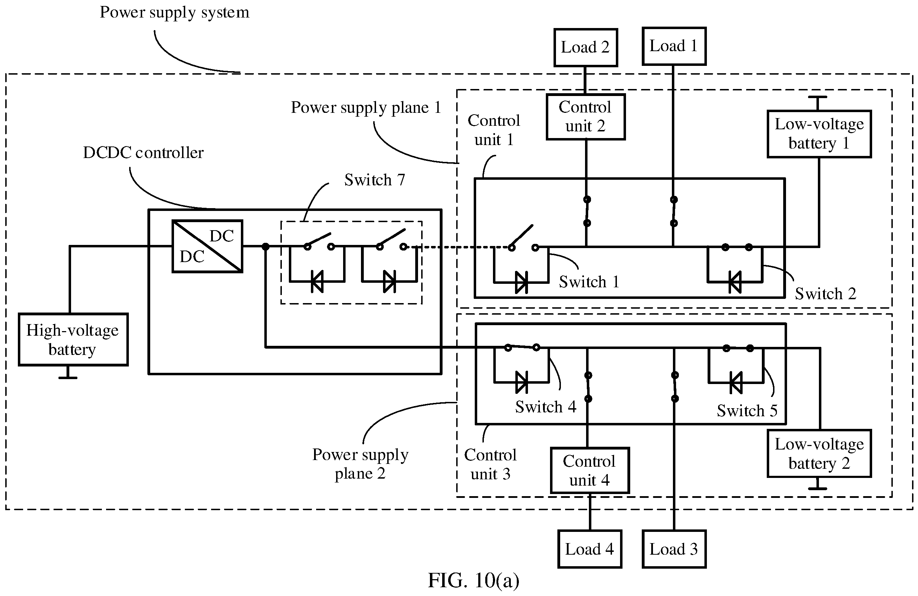

As shown in FIG. 10(a), when a fault (for example, a short circuit) occurs on a circuit between the DCDC controller and a control unit 1, the control unit 1 may control a switch 1 to be opened, and controls, at the same time, a switch 7 inside the DCDC controller to be opened, so that the low-voltage battery 1 supplies power to the load associated with the power supply plane 1. At the same time, the load associated with the power supply plane 2 is still powered by both the low-voltage battery 2 and the DCDC controller.

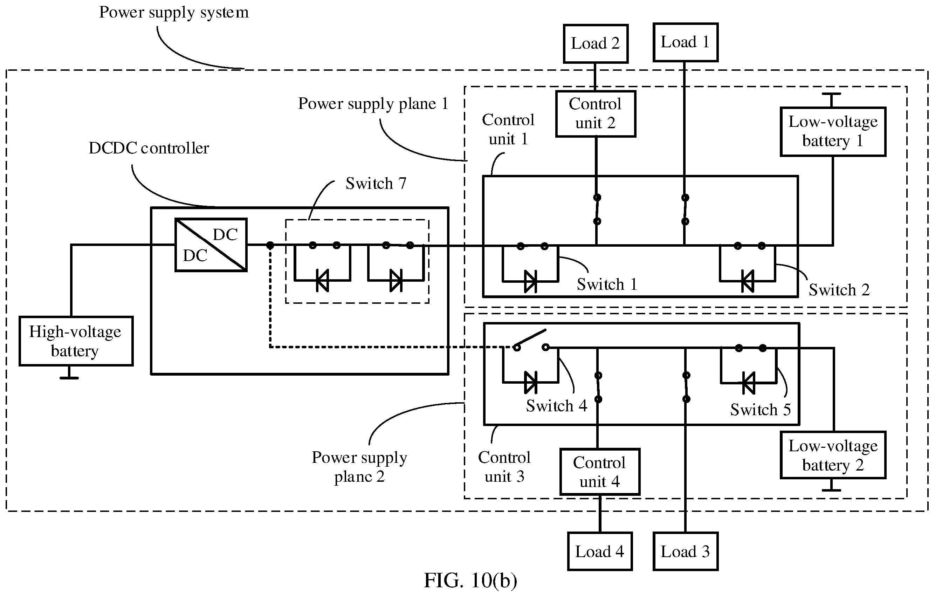

As shown in FIG. 10(b), when a fault (for example, a short circuit) occurs on a circuit between the DCDC controller and a control unit 3, the control unit 3 may control a switch 4 to be opened, so that the low-voltage battery 2 supplies power to the load associated with the power supply plane 2. At the same time, the load associated with the power supply plane 1 is still powered by both the low-voltage battery 1 and the DCDC controller.

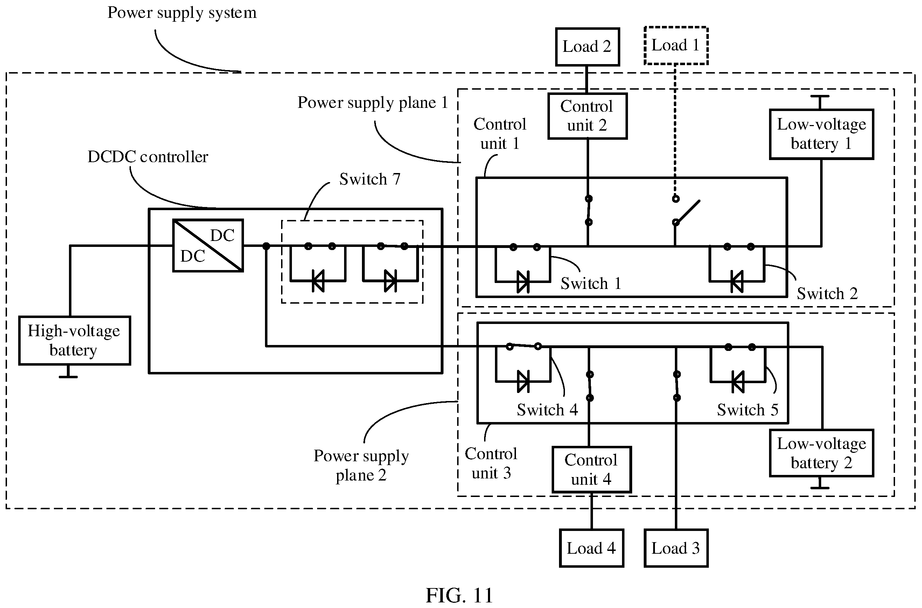

As shown in FIG. 11, when a fault (for example, a short circuit) occurs on a load 1 (or a sub-load of a load 1), a control unit 1 may control to disconnect the load 1 (or the sub-load) from the power supply system, and a load 2 associated with the power supply plane 1 may continue to be powered by the DCDC controller and the low-voltage battery 1. At the same time, the load associated with the power supply plane 2 is still powered by both the low-voltage battery 2 and the DCDC controller. In some possible implementations, no fault occurs on a load 1. When a total payload of the power supply system exceeds a preset payload threshold, a control unit 1 may control to disconnect one or more sub-loads of the load 1 from the power supply system, or the control unit 2 may control to disconnect one or more sub-loads of the load 2 from the power supply system.

In some possible implementations, when a state of charge of the low-voltage battery 1 is less than or equal to a first battery level threshold, the control unit 1 may control the DCDC controller to charge the low-voltage battery 1.

In some possible implementations, when a state of charge of the low-voltage battery 2 is less than or equal to a preset battery level threshold, the control unit 3 may control the DCDC controller to charge the low-voltage battery 2.

In some possible implementations, when a difference between a battery level of the low-voltage battery 1 and a battery level of the low-voltage battery 2 is greater than a second battery level threshold, for example, the battery level of the low-voltage battery 1 is lower, the control unit 1 controls the DCDC controller to charge the low-voltage battery 1, and the control unit 3 controls the DCDC controller to stop charging the low-voltage battery 2. When the difference between the battery level of the low-voltage battery 1 and the battery level of the low-voltage battery 2 is less than or equal to a third preset battery level threshold, the control unit 1 and the control unit 3 control the DCDC controller to charge the low-voltage battery 1 and the low-voltage battery 2 at the same time, or the control unit 1 and the control unit 3 control the DCDC controller to stop charging the low-voltage battery 1 and the low-voltage battery 2. For example, the third preset battery level threshold may be 5% of a total battery level of the low-voltage battery 1, or may be 5% of a total battery level of the low-voltage battery 2, or may be another value.

In some possible implementations, the power supply system further includes a detection unit. The detection unit is configured to detect whether the foregoing fault occurs on the power supply system, and when detecting that the fault occurs on the power supply system, send, to at least one of the control unit 1 to the control unit 4, a message indicating that the fault occurs on the power supply system, so that the control unit (for example, the control unit 1 to the control unit 4) controls a corresponding switch to be opened.

It may be understood that, when a fault occurs on the power supply and the load related to the power supply plane 2, for a control manner of the power supply system, refer to the descriptions in the foregoing embodiments, and details are not described herein again.

It should be noted that the low-voltage battery (for example, the low-voltage battery 1 or the low-voltage battery 2) in this application may be a 12 volts (volts, V) storage battery, or may be a 24 V storage battery, or may be a 36 V storage battery, or may be a 48 V storage battery.

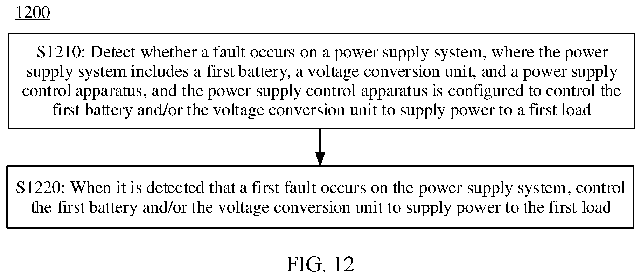

FIG. 12 shows a power supply method according to an embodiment of this application. The method 1200 may be performed by the power supply system in the foregoing embodiments, or may be performed by the power supply apparatus in the foregoing embodiments. The method 1200 may include the following steps.

S1210: Detect whether a fault occurs on a power supply system, where the power supply system includes a first battery, a voltage conversion unit, and a power supply apparatus, and the power supply apparatus is configured to control the first battery and/or the voltage conversion unit to supply power to a first load.

For example, the power supply system may include the power supply system in the foregoing embodiments. The first battery may include the first battery (for example, the low-voltage battery 1) in the foregoing embodiments. The voltage conversion unit may include the voltage conversion unit (for example, the DCDC controller) in the foregoing embodiments. The first load may include the first load (for example, the load 1 and/or the load 2) in the foregoing embodiments. The power supply apparatus may include the power supply apparatus (for example, the control unit and the control unit 1) in the foregoing embodiments.

S1220: When it is detected that a first fault occurs on the power supply system, control the first battery and/or the voltage conversion unit to supply power to the first load.

For example, the first fault includes but is not limited to: a fault occurs on the first battery, and a fault occurs on the voltage conversion unit. That a fault occurs on the voltage conversion unit includes: A short circuit occurs inside the voltage conversion unit, and a fault occurs on a circuit between the voltage conversion unit and the power supply apparatus.

For example, for a specific method for controlling, when it is detected that the first fault occurs on the power supply system, the first battery and/or the voltage conversion unit to supply power to the first load, refer to descriptions of corresponding parts in FIG. 7 to FIG. 11. Details are not described herein again.

Optionally, the power supply system further includes a second battery, and the second battery is configured to supply power to a second load. The controlling the first battery and/or the voltage conversion unit to supply power to the first load includes: when a second fault occurs on the power supply system, controlling at least two of the voltage conversion unit, the second battery, and the first battery to supply power to the first load and the second load.

Optionally, the second fault includes at least one of the following: a fault occurs on the first battery, a fault occurs on the second battery, or a fault occurs on the voltage conversion unit. That a fault occurs on the voltage conversion unit includes: A short circuit occurs inside the voltage conversion unit, and a fault occurs on a circuit between the voltage conversion unit and the power supply apparatus.

Optionally, the method further includes: when a fault occurs on the first load, controlling to disconnect the first load from the power supply system.

Optionally, the power supply apparatus includes a first load branch and a second load branch. The power supply system supplies power to a plurality of sub-loads of the first load through the first load branch and the second load branch. The power supply system further includes a second power supply apparatus. The second power supply apparatus is disposed between the second load branch and a part of the plurality of sub-loads. The controlling to disconnect the first load from the power supply system includes: controlling to disconnect the second load branch from one or more sub-loads of the first load.

Optionally, when a total payload of the power supply system is greater than or equal to a preset payload threshold, the method further includes: controlling to disconnect one or more sub-loads of the first load from the power supply system.

Optionally, the power supply apparatus includes a first load branch and a second load branch. The power supply system supplies power to a plurality of sub-loads of the first load through the first load branch and the second load branch. The power supply system further includes a second power supply apparatus. The second power supply apparatus is disposed between the second load branch and a part of the plurality of sub-loads. The controlling to disconnect one or more sub-loads of the first load from the power supply system includes: controlling to disconnect the second load branch from one or more of the part of sub-loads.

Optionally, the method further includes: when a state of charge of the first battery is less than or equal to a first battery level threshold, controlling the voltage conversion unit to charge the first battery.

Optionally, the method further includes: obtaining battery level status information of the first battery and battery level status information of the second battery; and controlling battery level balance between the first battery and the second battery based on the battery level status information.

Optionally, the controlling battery level balance between the first battery and the second battery includes: when a difference between a battery level of the first battery and a battery level of the second battery is greater than a second battery level threshold, controlling the voltage conversion unit to charge one battery that has a lower battery level in the first battery and the second battery.

An embodiment of this application further provides a vehicle. The vehicle includes the foregoing power supply apparatus or the foregoing power supply system.

An embodiment of this application further provides a computer program product. The computer program product includes computer program code. When the computer program code is run on a computer, the computer is enabled to implement the methods in embodiments of this application.

An embodiment of this application further provides a computer-readable storage medium. The computer-readable medium stores computer instructions, and when the computer instructions are run on a computer, the computer is enabled to implement the methods in embodiments of this application.

An embodiment of this application further provides a chip, including a circuit, configured to perform the methods in embodiments of this application.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for convenient and brief description, for a corresponding process in the foregoing method embodiments, refer to a specific working process of the system, apparatus, and unit described above. Details are not described herein again.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply apparatus, comprising:
a first interface, configured to connect to a first output end of a voltage conversion unit;
a second interface, configured to connect to a first battery; and
a third interface, configured to connect to a first load, wherein
the first interface is connected to the second interface through a first circuit, and the third interface is connected to the first circuit through a second circuit.

2. The apparatus according to claim 1, wherein the apparatus further comprises a first isolation unit, wherein the first isolation unit is disposed between the first interface and the third interface, and is configured to control connection and disconnection of a circuit between the voltage conversion unit and the first load.

3. The apparatus according to claim 2, wherein the first isolation unit comprises a first switch and a semiconductor device.

4. The apparatus according to any one of claims 1 to 3, wherein the apparatus further comprises a second isolation unit, wherein the second isolation unit is disposed between the second interface and the third interface, and is configured to control connection and disconnection of a circuit between the first battery and the first load.

5. The apparatus according to claim 4, wherein the apparatus further comprises an obtaining unit, wherein the obtaining unit is configured to obtain battery status information of the first battery, and the second isolation unit controls connection and disconnection of the circuit between the first battery and the first load and a circuit between the first battery and the voltage conversion unit based on the battery status information.

6. The apparatus according to any one of claims 1 to 5, wherein the apparatus further comprises a third isolation unit, wherein the third isolation unit is disposed between the first circuit and the third interface, and is configured to control connection and disconnection of the circuit between the first load and the first battery and/or the circuit between the first load and the voltage conversion unit.

7. The apparatus according to any one of claims 1 to 6, wherein the apparatus further comprises a fourth interface, wherein the fourth interface is configured to connect to a second load, the fourth interface is connected to a fifth interface through a third circuit, and the fifth interface is configured to connect to a second output end of the voltage conversion unit.

8. The apparatus according to claim 7, wherein the apparatus further comprises a sixth interface, wherein the sixth interface is configured to connect to a second battery, and the sixth interface is connected to the third circuit through a fourth circuit.

9. A power supply system, comprising a voltage conversion unit, a first battery, and a first power supply apparatus, wherein
the first power supply apparatus comprises:
a first interface, configured to connect to a first output end of the voltage conversion unit;
a second interface, configured to connect to the first battery; and
a third interface, configured to connect to a first load, wherein
the first interface is connected to the second interface through a first circuit, and the third interface is connected to the first circuit through a second circuit;
the voltage conversion unit comprises the first output end and a second output end, wherein the first output end is connected to the first interface, and the second output end is configured to connect to a second load; and
the second interface is connected to the first battery, and the third interface of the power supply apparatus is connected to the first load.

10. The system according to claim 9, wherein when a fault occurs on the power supply system, the power supply apparatus controls at least one of the voltage conversion unit and the first battery to supply power to the first load.

11. The system according to claim 9 or 10, wherein the power supply apparatus comprises a first load branch and a second load branch, and the power supply system supplies power to a plurality of sub-loads of the first load through the first load branch and the second load branch; and the power supply system further comprises a second power supply apparatus, wherein the second power supply apparatus is disposed between the second load branch and a part of the plurality of sub-loads, and the second power supply apparatus is configured to control connection and disconnection of a circuit between the power supply system and the part of sub-loads.

12. The system according to any one of claims 9 to 11, wherein the power supply apparatus further comprises a fourth interface, a fifth interface, and a sixth interface, wherein the fourth interface is connected to the fifth interface through a third circuit, and the sixth interface is connected to the third circuit through a fourth circuit; and
the second output end is connected to the fifth interface, and the fourth interface is connected to the second load; the system further comprises a second battery, wherein the second battery is connected to the sixth interface; and the power supply apparatus controls at least one of the voltage conversion unit, the second battery, and the first battery to supply power to the first load and the second load.

13. The system according to any one of claims 9 to 12, wherein the voltage conversion unit comprises a second switch, wherein an initial status of the second switch is closed, and when a fault occurs on the voltage conversion unit, a status of the second switch becomes opened.

14. The system according to any one of claims 9 to 13, wherein when a fault occurs on the first load, the power supply apparatus controls to disconnect the first load from the power supply system.

15. The system according to any one of claims 9 to 14, wherein when a total payload of the power supply system is greater than or equal to a preset payload threshold, the power supply apparatus controls to disconnect one or more sub-loads of the first load from the power supply system.

16. The system according to any one of claims 9 to 15, wherein when a state of charge of the first battery is less than or equal to a first battery level threshold, the power supply apparatus controls the voltage conversion unit to charge the first battery.

17. The system according to any one of claims 9 to 15, wherein when a voltage of the first battery is less than or equal to a first voltage threshold, the power supply apparatus controls the voltage conversion unit to charge the first battery.

18. The system according to claim 16 or 17, wherein when a difference between a battery level of the first battery and a battery level of the second battery is greater than a second battery level threshold, the power supply apparatus controls the voltage conversion unit to charge one battery that has a lower battery level in the first battery and the second battery.

19. The system according to any one of claims 16 to 18, wherein when a difference between the voltage of the first battery and a voltage of the second battery is greater than a second voltage threshold, the power supply apparatus controls the voltage conversion unit to charge one battery that has a lower voltage in the first battery and the second battery.

20. A power supply method, applied to the power supply system according to any one of claims 9 to 19, wherein the method comprises:
when it is detected that a first fault occurs on the power supply system, controlling a first battery and/or a voltage conversion unit to supply power to a first load.

21. The method according to claim 20, wherein the power supply system further comprises a second battery, the second battery is configured to supply power to a second load, and the controlling a first battery and/or a voltage conversion unit to supply power to a first load comprises:
when a second fault occurs on the power supply system, controlling at least two of the voltage conversion unit, the second battery, and the first battery to supply power to the first load and the second load.

22. The method according to claim 21, wherein the second fault comprises at least one of the following: a fault occurs on the first battery, a fault occurs on the second battery, or a fault occurs on the voltage conversion unit.

23. The method according to any one of claims 20 to 22, wherein the method further comprises:
when a fault occurs on the first load, controlling to disconnect the first load from the power supply system.

24. The method according to any one of claims 20 to 23, wherein when a total payload of the power supply system is greater than or equal to a preset payload threshold, the method further comprises:
controlling to disconnect one or more sub-loads of the first load from the power supply system.

25. The method according to claim 24, wherein a power supply apparatus comprises a first load branch and a second load branch, and the power supply system supplies power to a plurality of sub-loads of the first load through the first load branch and the second load branch; the power supply system further comprises a second power supply apparatus, wherein the second power supply apparatus is disposed between the second load branch and a part of the plurality of sub-loads; and the controlling to disconnect one or more sub-loads of the first load from the power supply system comprises:
controlling to disconnect the second load branch from one or more of the part of sub-loads.

26. The method according to any one of claims 20 to 25, wherein the method further comprises:
when a state of charge of the first battery is less than or equal to a first battery level threshold, controlling the voltage conversion unit to charge the first battery.

27. The method according to any one of claims 20 to 26, wherein the method further comprises:
when a voltage of the first battery is less than or equal to a first voltage threshold, controlling, by the power supply apparatus, the voltage conversion unit to charge the first battery.

28. The method according to claim 21 or 22, wherein the method further comprises:
obtaining battery level status information of the first battery and the second battery; and
controlling battery level balance between the first battery and the second battery based on the battery level status information.

29. The method according to claim 28, wherein the controlling battery level balance between the first battery and the second battery comprises:
when a difference between a battery level of the first battery and a battery level of the second battery is greater than a second battery level threshold, controlling the voltage conversion unit to charge one battery that has a lower battery level in the first battery and the second battery.

30. The method according to claim 28 or 29, wherein the controlling battery level balance between the first battery and the second battery comprises:
when a difference between the voltage of the first battery and a voltage of the second battery is greater than a second voltage threshold, controlling the voltage conversion unit to charge one battery that has a lower voltage in the first battery and the second battery.

31. A vehicle, comprising the power supply apparatus according to any one of claims 1 to 8, or comprising the power supply system according to any one of claims 9 to 19.

32. A computer-readable storage medium, wherein the computer-readable storage medium stores instructions, and when the instructions are executed by a processor, the processor is enabled to perform the method according to any one of claims 20 to 30.

33. A chip, wherein the chip comprises a circuit, and the circuit is configured to perform the method according to any one of claims 20 to 30.

34. A computer program product, wherein the computer program product comprises computer program code, and when the computer program code is run on a computer, the computer is enabled to perform the method according to any one of claims 20 to 30.
